# NEUE EUROPÄISCHE PATENTSCHRIFT

(11) **EP 1 654 470 B2**
(45) Veröffentlichungstag und Bekanntmachung des Hinweises auf die Entscheidung über den Einspruch: **16.03.2016**
(45) Hinweis auf die Patenterteilung: 23.09.2009
(21) Anmeldenummer: 04762610.6
(22) Anmeldetag: 05.08.2004
(51) Int. Cl.: F16C 33/12

(54) **SCHICHTVERBUNDWERKSTOFF, HERSTELLUNG UND VERWENDUNG**
LAMINATED COMPOSITE MATERIAL, PRODUCTION AND USE THEREOF
MATERIAU COMPOSITE MULTICOUCHE, SON PROCEDE DE PRODUCTION ET SON UTILISATION

(30) Priorität: 12.08.2003 DE 10337030
(43) Veröffentlichungstag der Anmeldung: 10.05.2006
(73) Patentinhaber: Federal-Mogul Wiesbaden GmbH, 65201 Wiesbaden (DE)
(72) Erfinder: ADAM, Achim, 64569 Nauheim (DE); STASCHKO, Klaus, 65232 Taunusstein-Seitzenhahn (DE)
(74) Vertreter: Mehler Achler
(86) Internationale Anmeldenummer: PCT/DE2004/001765
(87) Internationale Veröffentlichungsnummer: WO 2005/015036

(56) Entgegenhaltungen:
- EP-A2- 1 113 180
- DE-A- 3 719 789
- DE-A- 3 727 591
- DE-A- 19 728 777
- DE-A- 19 754 221
- DE-A1- 10 054 461
- DE-A1-102004 030 018
- DE-C1- 19 963 385

## Beschreibung

Die Erfindung betrifft einen Schichtverbundwerkstoff, insbesondere für Gleitlager oder Buchsen, mit einer Trägerschicht, einer Lagermetallschicht aus einer Kupferlegierung oder einer Aluminiumlegierung, einer Nickel-Zwischenschicht und einer Gleitschicht. Ferner betrifft die Erfindung Verwendungen des Schichtverbundwerkstoffes.

Klassische Schichtverbundwerkstoffe mit dem Aufbau Stahlrücken als Trägerschicht, Bleibronze als Lagermetallschicht und Gleitschicht aus Blei-Zinn-Kupfer, wie sie beispielsweise in Glyco-Ingenieurberichte 1/91 beschrieben werden, haben sich durch hohe Zuverlässigkeit und mechanische Belastbarkeit bewährt. Die Gleitschicht wird dabei galvanisch abgeschieden. Es handelt sich bei ihr um eine multifunktionale Schicht, in die Fremdpartikel eingebettet werden können, die als Korrosionsschutz dient, die Notlaufeigenschaften zeigt und insbesondere für den Einlauf bzw. die Anpassung der Gleitpartner geeignet ist.

Auch die Lagermetallschicht weist hinreichende Notlaufeigenschaften für den Fall auf, dass die Gleitschicht zumindest stellenweise völlig abgetragen ist.

Die klassischen Schichtverbundwerkstoffe weisen eine Gleitschicht auf Bleibasis auf. Eine gängige Legierung ist z.B. PbSn10Cu2. Derartige Gleitschichten weisen niedrige Härten um 12 - 15 HV (Vicker's Härte) auf. Daher besitzen sie gute Einbettfähigkeit und sind fressunempfindlich. Aus Arbeitsschutz- und Umweltschutzgründen ist es allerdings wünschenswert, das Schwermetall Blei durch andere geeignete Werkstoffe zu ersetzen.

Ein Ansatz besteht darin, in hoch belasteten Lagerungen harte Schichten als Gleitschichten einzusetzen. Z.B. werden durch PVD-Verfahren (physical vapor deposition) Aluminium-Zinn-Schichten mit Härten um 80 HV abgeschieden. Diese sind bleifrei, allerdings in der Herstellung sehr teuer. Derartige Lager sind sehr verschleißbeständig. Sie besitzen aber kaum Einbettfähigkeit und werden daher meist mit weichen bleihaltigen Schichten als Gegenschale kombiniert. Allerdings ist es wünschenswert, auch bei Gegenschalen Blei durch andere Werkstoffe zu ersetzen.

Es ist versucht worden, reines Zinn als Gleitfläche zu verwenden. Mit einer Härte von ungefähr 10 HV ist es allerdings noch weicher als die konventionellen Bleilegierungen und vermag daher die Belastungen, die z.B. in Kurbelwellenhaupt- und Pleuellagern entstehen, nicht aufzunehmen.

In der DE 197 28 777 A1 wird ein Schichtverbundwerkstoff für Gleitelemente beschrieben, dessen Gleitschicht aus einer bleifreien, Zinn und Kupfer aufweisenden Legierung besteht, wobei der Kupferanteil 3 - 20 Gew.-% und der Zinnanteil 70 - 97 Gew.-% beträgt. Durch die Zugabe von Kupfer wird die Härte der Gleitschicht gegenüber reinem Zinn erhöht. Diese Gleitschicht wird mit Hilfe eines methylsulfonsauren Elektrolyten mit Kornfeinungszusätzen galvanisch abgeschieden. Die so erzeugte Gleitschicht besitzt die Eigenschaft ternärer Bleibasis-Gleitschichten. In der DE 197 28 777 A1 wird ferner vorgeschlagen, zur weiteren Verbesserung der Verschleißfestigkeit im Elektrolytbad dispergierte Hartstoffteilchen vorzusehen, die in die Schicht eingebaut werden. Dies ist aber mit zusätzlichem Aufwand und Kosten verbunden. Zwischen dem Lagermetall und der Gleitschicht kann eine 1 - 3 µm dicke Nickelschicht zusammen mit einer 2 - 10 µm dicken Nickel-Zinnschicht als Diffusionssperrschicht vorgesehen sein.

In der DE 197 54 221 A1 ist ein Schichtverbundwerkstoff mit einer Gleitschicht mit 3 - 30 Gew.-% Kupfer, 60 - 97 Gew.-% Zinn und 0,5 - 10 Gew.-% Kobalt offenbart. Dadurch wird eine weitere Erhöhung der mechanischen Belastbarkeit erreicht und eine Versprödung der Bindungsschicht zwischen Gleitschicht und Nickeldiffusionssperrschicht verhindert. Durch das Kobalt wird die Diffusionsneigung des Zinns zum Nickel vermindert. Durch die Zulegierung des Kobalts wird allerdings der galvanische Abscheidungsprozess komplexer, was die Prozesssicherheit verringert. Im übrigen kann wie in der DE 197 28 777 A1 die 1 - 3 µm dicke Nickelschicht mit einer 2 - 10 µm dicken Nickel-Zinnschicht als Diffusionssperre kombiniert werden.

In der EP 1 113 180 A2 wird ein Schichtverbundwerkstoff für Gleitlager beschrieben, dessen Gleitschicht eine Zinnmatrix besitzt, in die Zinn-Kupfer-Partikel eingelagert sind, die aus 39 - 55 Gew.-% Kupfer und Rest Zinn bestehen. Charakteristisch für den Schichtverbundwerkstoff ist außerdem, dass nicht nur eine Zwischenschicht aus Nickel einer Dicke von 1 - 4 mm vorgesehen ist, sondern zwischen der Nickel-Zwischenschicht und der Gleitschicht eine zweite Zwischenschicht einer Dicke 2 - 7 µm aus Zinn und Nickel angeordnet ist. Die erste Zwischenschicht aus Nickel wird auf die Lagermetallschicht aus einem Watt's Nickelelektrolyten aufgebracht. Auf diese erste Zwischenschicht wird eine aus Nickel und Zinn bestehende zweite Zwischenschicht galvanisiert. Hierzu wird ein modifizierter Chlorid/Fluorid-Elektrolyt verwendet. Mittels den Zwischenschichten aus Nickel und Zinn-Nickel wird ein sich selbst an die Belastung anpassendes System erzeugt, bei dem sich je nach thermischen Bedingungen durch ein Wachstum der Zinn-Nickel-Schicht die Belastbarkeit erhöht.

Die DE 100 54 461 A offenbart einen Schichtverbundwerkstoff gemäß Oberbegriff des Patentanspruches 1.

Aufgabe der vorliegenden Erfindung ist es, die Nachteile des Standes der Technik zu überwinden.

Gelöst wird die Erfindung durch einen Schichtverbundwerkstoff gemäß Anspruch 1. Ferner wird die Aufgabe gelöst durch Verwendungen gemäß den Ansprüchen 5 und 6.

Überraschenderweise hat es sich gezeigt, dass sich auch ohne anfängliches Vorhandensein einer Zinn-Nickelschicht langsam eine solche bildet. Bei Erwärmung des Schichtverbundwerkstoffes, wie dies beispielsweise in der Einlaufphase bei aus erfindungsgemäßem Schichtverbundwerkstoff hergestellten Buchsen und Lagern geschieht, diffundiert Nickel in die im wesentlichen aus Zinn bestehende Gleitschicht ein. Hierdurch bildet sich durch Erhöhung der Konzentration einer zweiten in der Zinnmatrix enthaltenen harten Phase aus Kupfer-Zinn- und/oder Silber-Zinn langsam eine höherfeste Oberfläche aus. Durch die Reduzierung der tragenden Schichtdicke erhöht sich die Ermüdungsfestigkeit.

Im Gegensatz zum Stand der Technik, demgemäss dünne Nickelschichten von 1 - 3 µm aufgebracht wurden, die als Diffusionssperre dienten, bildet die erfindungsgemäße Nickelschicht eine Nickelquelle für die Ausbildung der anfangs nicht vorhandenen Zinn-Nickelschicht. Die Nickelschicht muss dicker als 4 µm sein, da andernfalls durch das Eindiffundieren des Nickels in die Zinnschicht die Nickelschicht vollständig verbraucht werden kann. Dies würde zur Ablösung der nun aus Zinn-Nickel und der Zinn-Gleitschicht-Legierung bestehenden Deckschichten führen. Bisher wurden dickere Nickelschichten möglichst vermieden, da sie keine guten Gleiteigenschaften besitzen und notfalls schnell den Verschleiß in das darunterliegende Lagermetall zulassen sollen.

Die Metalle Kupfer und Silber können einzeln oder in Kombination in der Zinnmatrix vorhanden sein. Ihr Gesamtanteil sollte zwischen ca. 0,5 und 20 Gew.-% betragen. Vorteilhafterweise sollte der Gesamtgehalt von Kupfer und/oder Silber zwischen ca. 2 und 8 Gew.-% betragen.

Die Schichtdicke der Nickelzwischenschicht beträgt mehr als 4 bis 6 µm, die der Gleitschicht ca. 6 - 14 µm. Bei Schichtdicken in diesen Größenordnungen wird gewährleistet, dass weder die Nickelschicht noch die Gleitschicht auf Zinnbasis diffusionsbedingt vollständig umgesetzt werden. Dies würde zu Haftungsproblemen bzw. ungewollten Wechselwirkungen wie Sprödphasenbildung zwischen dem in der Gleitschicht enthaltenen Zinn und dem Lagermetall führen.

Vorteilhafterweise handelt es sich bei den Lagermetallen um Kupfer-Aluminium-, Kupfer-Zinn-, Kupfer-Zinn-Blei-, Kupfer-Zink-, Kupfer-Zink-Silizium-, Kupfer-Zink-Aluminium-, Kupfer-Aluminium-Eisen- oder Kupfer-Zinklegierungen. Bevorzugt sind Lagermetalle auf Kupfer- oder Aluminiumbasis, d.h. deren Kupfer- oder Aluminiumanteil zwischen 50 und 95 Gew.-% liegt.

Zur Herstellung des erfindungsgemäßen Schichtverbundwerkstoffes wird auf einen Verbund aus Stahl und Lagermetall in einem ersten Schritt chemisch oder elektro-chemisch die Zwischenschicht aus Nickel aufgebracht. Danach wird die Gleitschicht aus einem binären oder ternären alkylsulfonsauren Galvanisierbad unter Zusatz von nichtionischen Netzmitteln und freier Alkylsulfonsäure abgeschieden. Bei der Herstellung von Lagern werden zunächst die Lager aus dem Verbund aus Stahl und Lagermetall vorgefertigt und in weiteren Schritten die Zwischenschicht aus Nickel und die Gleitschicht aufgebracht.

Der erfindungsgemäße Schichtverbundwerkstoff weist den großen Vorteil auf, dass sich beim Einlauf daraus hergestellter Lager und Buchsen unter den Betriebsbedingungen eine Interdiffusionsschicht aus Zinn und Nickel von selber ausbildet, die die Verschleißfestigkeit erhöht. Sie muss nicht in einem einzelnen Prozessschritt separat aufgebracht werden. Es besteht die Möglichkeit, das Entstehen der Interdiffusionsschicht durch künstliches Altern der Gleitlager oder Buchsen zu fördern. Besonders bewährt hat sich dabei eine Wärmebehandlung bei ca. 150° - 170°C, die sich über mehrere Stunden bis einige Tage erstreckt.

Der erfindungsgemäße Schichtverbundwerkstoff eignet sich besonders zur Herstellung von Kurbelwellenhauptlagern und von Pleuellagern, insbesondere für das große Pleuelauge.

Die Erfindung soll anhand eines Beispieles und von Figuren näher erläutert werden.

Es zeigen:
- Figur 1: einen Schnitt durch die Lagermetallschicht, Nickelzwischenschicht und Gleitschicht eines erfindungsgemäßen Schichtverbundwerkstoffes;
- Figur 2: einen Schnitt durch ein aus dem erfindungsgemäßen Schichtverbundwerkstoff bestehendes Lager nach der Einlaufphase und
- Figur 3: die an dem Lager gemäß Figur 2 im Bereich III-III durch energiedispersive Röntgenanalyse ermittelte Elementverteilung.

Auf ein vorgefertigtes Lager aus einem Verbund aus Stahl und einem Lagermetall aus CuPb22Sn wird nach entsprechender Vorbehandlung eine Nickeldiffusionssperrschicht aus einem Watt's Nickelelektrolyten aufgebracht.

Auf die so erzeugte Nickelzwischenschicht wird die Gleitschicht auf Zinnbasis galvanisch abgeschieden. Dafür wird folgendes Elektrolytsystem auf wässriger Basis eingesetzt:

| | |
|---|---|
| Sn²⁺ als Zinnmethansulfonat | 30 - 45 g/l |
| Cu²⁺ als Kupfermethansulfonat | 2 - 8 g/l |
| Ag⁺ als Silbermethansulfonat | 0,1 - 2 g/l |
| Methansulfonsäure | 80 - 140 g/l |
| Zusatz "N" (Cerolyt BMM-T) | 30 - 45 g/l |
| Resorcin | 1,5 - 4 g/l |

Als Anodenmaterial kommt Zinn zum Einsatz. Die Badtemperatur zur Abscheidung der Gleitschicht liegt bei 20 - 40°C. Als Stromdichte werden 1,5 - 3,0 x 10⁻² A/m² eingesetzt. Die Distanz Anode zu Kathode beträgt zwischen ca. 300 - 400 mm. Das Oberflächenverhältnis Anode zu Kathode sollte im Wesentlichen bei 1:1 (+/- 10%) liegen. Um kontinuierlich entstehendes Sn⁴⁺ zu entfernen, muss der Elektrolyt über eine Filtrationsanlage umgewälzt werden.

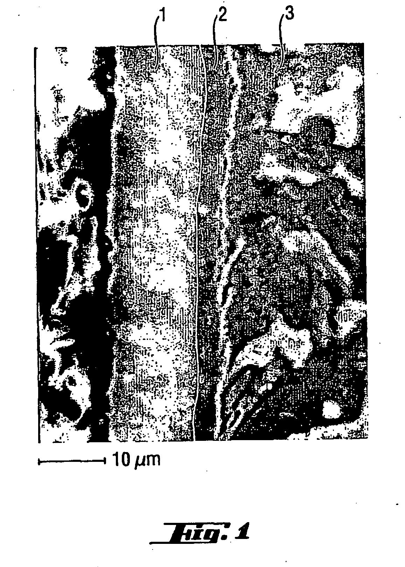

Die Figur 1 zeigt die Schichtstruktur eines wie oben beschrieben erhaltenen Schichtverbundwerkstoffes mit einer Kupfer-Zinn-Gleitschicht als Schnittbild. Mit 1 ist dabei die Gleitschicht aus Kupfer-Zinn einer Dicke von 13,1 µm bezeichnet, mit 2 die Nickel-Zwischenschicht einer Dicke von 4,9 µm und mit 3 das Lagermetall aus CuPb22Sn.

Dabei ist der Grenzverlauf zwischen beiden Schichten 1 und 2 durch eine helle Linie verdeutlicht.

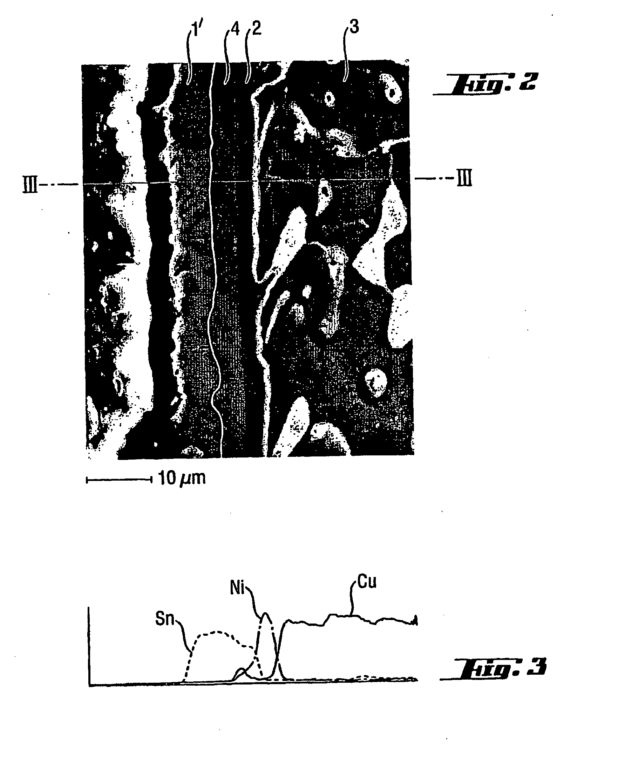

In Figur 2 ist ein Lager aus dem in Figur 1 gezeigten Schichtverbundwerkstoff nach Einstellung des Betriebszustandes, d.h. nach der Einlaufphase als Schnittbild gezeigt. Dazu wurde das Lager 500 h lang bei 150°C wärmebehandelt. Durch Diffusion ist die mit 4 bezeichnete Zinn-Nickel-Schicht einer Dicke von 4,1 µm entstanden, die zu einer belastbareren und verschleißfesteren Gleitfläche führt. Dass es sich um eine Zinn-Nickel-Schicht handelt, wird durch die in Figur 3 dargestellten Ergebnisse einer energiedispersiven Röntgenanalyse bestätigt. Die Abstände auf der X-Achse stimmen mit den entsprechenden Schichtdicken im Bereich III-III der Figur 2 überein. Die Gleitschicht 1' und die Nickelschicht 2 haben nun geringere Dicken von 10,2 µm respektive 3,3 µm.

Dabei ist der Grenzverlauf zwischen den beiden Schichten 1' und 4 in der Figur 2 durch eine helle Linie verdeutlicht.

Zur Bewertung der Leistungsfähigkeit von Lagern, die aus dem erfindungsgemäßen Schichtverbundwerkstoff hergestellt werden, wurden Underwood-Tests durchgeführt. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Über die Lagerbreite wird die spezifische Belastung eingestellt. Die Drehzahl beträgt 4000 Umdrehungen/min. Es wurden die Gleitschichtermüdung und der Verschleiß nach 250 h Dauerlauf gemessen. Die in diesem Test erzielten Ergebnisse sind in Tabelle 1 aufgeführt (Beispiel-Nrn. 5 - 8). Zum Vergleich sind auch die Werte angegeben, die mit Werkstoffen nach dem Stand der Technik (Beispiele 1 - 4) erreicht werden.

Wie sich den in Tabelle 1 aufgeführten Ergebnissen entnehmen lässt, sind die Lager aus erfindungsgemäßem Schichtverbundwerkstoff den herkömmlichen Lagern mit einer Gleitschicht auf Bleibasis bezüglich Gleitschichtermüdung, Verschleiß und maximaler Last bis zum Totalverschleiß deutlich überlegen. Sogar das Lager mit einer reinen Zinngleitschicht (Beispiel 5) wird mit einer dicken Nickelschicht fast den Lagern mit bleihaltiger Gleitschicht vergleichbar und ist für leichtere Beanspruchungen verwendbar.

**Tabelle 1**

| | **Stand der Technik** | | | | **erfindungsgemäß** | | | |
|---|---|---|---|---|---|---|---|---|
| **Bsp.-Nr.** | **1** | **2** | **3** | **4** | **5** | **6** | **7** | **8** |
| **Zusammensetzung** | *PbSn5Cu2* | *PbSn10Cu5* | *PbSn14Cu8* | *Sn* | *Sn* | *SnCu6* | *SnAg3* | *SnCu3Ag2* |
| **Dicke der Ni-Schicht in µm** | *1* | 2 | *1,5* | *1* | *5* | *4,5* | *5,5* | *4,5* |
| **max. Last in MPa ohne Gleitschichtermüdung** | 52,5 | 60 | 65 | 35 | 50 | 70 | 67,5 | 72,5 |
| **Verschleiß in µm bei 60MPa** | 15 | 11 | 9 | nicht meßbar | 12 | 6 | 8 | 6 |
| **max. Last in MPa bis Totalverschleiß der Gleitschicht** | 60 | 67,5 | 80 | 45 | 65 | 85 | 82,5 | 85 |

## Patentansprüche

1. Schichtverbundwerkstoff, insbesondere für Gleitlager oder Buchsen, mit einer Trägerschicht, einer Lagermetallschicht (3) aus einer Kupferlegierung oder einer Aluminium-Legierung, darauf einer Nickel-Zwischenschicht (2) und darauf einer Gleitschicht (1), wobei die Gleitschicht (1) aus ca. 0 - 20 Gew.-% Kupfer und/oder Silber und Rest Zinn besteht, **dadurch gekennzeichnet, dass** die Schichtdicke der Nickelschicht mehr als 4 und bis 6 µm und die Schichtdicke der Gleitschicht (1) ca. 6 - 14 µm beträgt.

2. Schichtverbundwerkstoff nach Anspruch 1, **dadurch gekennzeichnet, dass** die Gleitschicht (1) mindestens ca. 0,5 - 20 Gew.-% Kupfer und/oder Silber und als Rest Zinn aufweist.

3. Schichtverbundwerkstoff nach Anspruch **1** oder 2, **dadurch gekennzeichnet, dass** die Gleitschicht (1) aus ca. 2 - 8 Gew.-% Kupfer und/oder Silber und Rest Zinn besteht.

4. Schichtverbundwerkstoff nach einem der Ansprüche 1 bis 34, **dadurch gekennzeichnet, dass** die Lagermetallschicht (3) aus einer Kupfer-Aluminium, Kupfer-Zinn, Kupfer-Zinn-Blei, Kupfer-Zink, Kupfer-Zink-Silizium, Kupfer-Zink-Aluminium, Aluminium-Zink oder Kupfer-Aluminium-Eisen-Legierung besteht.

5. Verwendung des Schichtverbundwerkstoffes nach Anspruch 1 bis 4 als Kurbeiwellenhauptlager.

6. Verwendung des Schichtverbundwerkstoffes nach Anspruch 1 bis 4 als Pleuellager, insbesondere im großen Auge des Pleuels.

## Claims

1. Laminate composite material, in particular for plain bearings or bushes, having a carrier layer, a bearing metal layer (3) of a copper alloy or an aluminium alloy, a nickel intermediate layer (2) thereon and a sliding layer (1) thereon, wherein the sliding layer (1) comprises approximately from 0 to 20% by weight of copper and/or silver and the balance tin, **characterised in that** the layer thickness of the nickel layer is more than 4 and up to 6 µm and the layer thickness of the sliding layer (1) is approximately from 6 to 14 µm.

2. Laminate composite material according to claim 1, **characterised in that** the sliding layer (1) has at least approximately from 0.5 to 20% by weight of copper and/or silver and as the balance tin.

3. Laminate composite material according to claim 1, **characterised in that** the sliding layer (1) comprises approximately from 2 to 8% by weight of copper and/or silver and the balance tin.

4. Laminate composite material according to any one of claims 1 to 3, **characterised in that** the bearing metal layer (3) comprises a copper/aluminium, copper/tin, copper/tin/lead, copper/zinc, copper/zinc/silicon, copper/zinc/aluminium, aluminium/zinc or copper/aluminium/iron alloy.

5. Use of the laminate composite material according to claim 1 to 4 as a crankshaft main bearing.

6. Use of the laminate composite material according to claim 1 to 4 as a connecting rod bearing, in particular in the large eye of the connecting rod.

## Revendications

1. Matériau composite multicouche, en particulier destiné à des paliers lisses ou à des coussinets, comportant une couche de support, une couche de métal antifriction (3) constituée d'un alliage de cuivre ou d'un alliage d'aluminium, recouverte d'une couche intermédiaire de nickel (2) puis d'une couche de glissement (1), où la couche de glissement (1) comprend d'environ 0 à 20 % en poids de cuivre et/ou d'argent, le reste étant de l'étain, **caractérisé en ce que** l'épaisseur de couche de la couche de nickel fait plus de 4 et jusqu'à 6 µm et **en ce que** l'épaisseur de couche de la couche de glissement (1) est environ 6 à 14 µm.

2. Matériau composite multicouche selon la revendication 1, **caractérisé en ce que** la couche de glissement (1) présente au moins environ 0,5 à 20 % en poids de cuivre et/ou d'argent, le reste étant de l'étain.

3. Matériau composite multicouche selon la revendication 1 ou 2, **caractérisé en ce que** la couche de glissement (1) est réalisée avec environ 2 à 8 % en poids de cuivre et/ou d'argent, le reste étant de l'étain.

4. Matériau composite multicouche selon l'une des revendications 1 à 3, **caractérisé en ce que** la couche de métal antifriction (3) est constituée d'un alliage de cuivre-aluminium, de cuivre-étain, de cuivre-étain-plomb, de cuivre-zinc, de cuivre-zinc-silicium, de cuivre-zinc-aluminium, d'aluminium-zinc ou de cuivre-aluminium-fer.

5. Utilisation du matériau composite multicouche selon les revendications 1 à 4 en tant que palier principal de vilebrequin.

6. Utilisation du matériau composite multicouche selon les revendications 1 à 4 en tant que coussinet de bielle, en particulier dans la tête de bielle.
